# EUROPÄISCHE PATENTANMELDUNG

(11) **EP 0 623 634 A1**
(43) Veröffentlichungstag der Anmeldung: **09.11.1994**
(21) Anmeldenummer: 94106220.0
(22) Anmeldetag: 21.04.1994
(51) Int. Cl.: C08G 18/22, C08G 18/18

(54) **Verfahren zur Herstellung von Polyurethanschaumstoffen**

(30) Priorität: 04.05.1993 DE 4314626
(71) Anmelder: BAYER AG, 51368 Leverkusen (DE)
(72) Erfinder: Liman, Ulrich, Dr., D-40764 Langenfeld (DE); Kaiser, Manuel, D-50999 Köln (DE); Sanders, Josef, Dr., D-51373 Leverkusen (DE); König, Klaus, Dr., D-51519 Odenthal (DE)

(57) **Zusammenfassung**

Ein neues Verfahren zur Herstellung von Polyurethanschaumstoffen durch Umsetzung a) einer Polyisocyanatkomponente mit b) einer Salzgruppen-freien Polyolkomponente, in Gegenwart von c) mindestens einem Treibmittel, d) in der Salzform vorliegenden Estergruppen-freien Ethergruppen aufweisenden Carbonsäuren als Katalysatoren, sowie gegebenenfalls e) weiteren Hilfs- und Zusatzmitteln, vorzugsweise unter Hinterschäumen einer Kunststoffolie als Deckschicht zwecks Herstellung von Verbundkörpern, sowie die so hergestellten Verbundkörper.

## Beschreibung

Die Erfindung betrifft ein neues Verfahren zur Herstellung von wassergetriebenen Polyurethanschaumstoffen aus an sich bekannten Ausgangsmaterialien unter Mitverwendung von speziellen, zumindest teilweise in der Alkalisalz-Form vorliegenden Ethergruppen-aufweisenden Carbonsäuren als Katalysatoren und insbesondere von Verbundkörpem durch Hinterschäumen von Kunststoffolien mit derartige Katalysatoren enthaltenden, zu Polyurethanschaumstoff ausreagierenden Reaktionsgemischen, sowie die hierbei erhaltenen Verbundkörper.

Wassergetriebene Schaumstoffe, insbesondere Folienverbundkörper, die durch Hinterschäumen einer Kunststoffolie mit einem zu einem weichen oder halbharten Polyurethanschaumstoff ausreagierenden Reaktionsgemisch hergestellt werden, sind von großer technischer Bedeutung und werden beispielsweise in größerem Umfang zur Innenausstattung von Kraftfahrzeugen, Flugzeugen oder zur Herstellung von Polstermöbeln verwendet. Für die meisten dieser Einsatzgebiete ist es wesentlich, daß die Schaumstoffe neben guten mechanischen Eigenschatten keinen oder nur geringen Einfluß auf die Wärmealterung der Deckschicht aufweisen.

Insbesondere das Verhalten bei der Wärmealterung (Tendenz zur Versprödung der PVC-Deckschicht mit Rißbildung) der bekannten Hinterfüllschäume stellt ein verbesserungswürdigeres Problem dar.

Zu schlechtem Wärmestand führende Bestandteile des zum Polyurethanschaumstoff ausreagierenden Reaktionsgemisches sind beispielsweise die oftmals als Katalysator eingesetzten tertiären Amine, so daß bereits versucht wurde, diese Amine beispielsweise durch Alkalimetallsalze von Carbonsäuren wie beispielsweise Kaliumacetat zu ersetzen. Die alleinige Katalyse mit derartigen Katalysatoren ist jedoch mit dem Nachteil einer zu langen Entformzeit oder (bei erhöhter Katalysatorkonzentration) zu kurzer Startzeit verknüpft. Die Verwendung von organischen Zinnverbindungen führt zwar im allgemeinen zu einer Verbesserung des Alterungsverhaltens, jedoch wegen der Hydrolysestabilität der organischen Zinnverbindungen im wasserhaltigen Polyol zu Problemen bezüglich der konstanten Aktivierung der Polyol-Komponente über einen längeren Lagerzeitraum. Zusätzlich zur Verbesserung des Wärmestands werden sogenannte "amine trapping agents" dem Schaumsystem zugesetzt, die aber nur zu einer graduellen Verbesserung führen und für aminkatalysierte Systeme nicht in Frage kommen.

Die US-PS 4 868 043 empfiehlt als Katalysatoren die Verwendung von in der Alkalisalz-Form vorliegenden Estercarbonsäuren aus (i) intramolekularen Carbonsäureanhydriden und (ii) Ethergruppen-freien einwertigen Alkoholen und insbesondere von in der Alkalisalz-Form vorliegenden Halbestern aus (i) intramolekularen Carbonsäureanhydriden und langkettigen Diolen. Die Hydroxyl-und Ethergruppenfreien Estercarbonsäuresalze weisen eine unbefriedigende Verträglichkeit mit den übrigen Reaktionspartnern auf. Beide Katalysätortypen der Vorveröffentlichung ist schließlich der Umstand gemeinsam, daß ihre Verwendung zu Reaktionsgemischen führt, die bezuglich des Verhältnisses von (erwünschter langer) Startzeit zu (erwünschter kurzer) Entformzeit den Anforderungen der Praxis noch nicht in optimaler Weise entsprechen.

Wie jetzt überraschend gefunden wurde, können die angesprochenen Probleme unter Verwendung der nachstehend näher beschriebenen erfindungswesentlichen Katalysatoren in optimaler Weise gelöst werden. Der wesentliche Punkt des nachstehend naher beschriebenen erfindungsgemäßen Verfahrens besteht darin, als Katalysatoren Ethercarboxylate zu verwenden, die aufgrund ihres Gehaltes an Ethergruppen mit den übrigen Bestandteilen der Reaktionsmischungen ausreichend verträglich sind und die aufgrund der Abwesesenheit von hydrolyseanfälligen Estergruppen keine, durch hydrolytische Zersetzung der Katalysatoren verursachte Änderung der Reaktivität der Reaktionsmischung bewirken. Insbesondere zeigen die erfindungsgemäße Katalysatoren enthaltenden Reationsmischungen ein günstiges Verhältnis von langen Startzeiten bei ausreichend kurzen Entformzeiten.

Gegenstand der Erfindung ist somit ein Verfahren zur Herstellung von Polyurethanschaumstoffen durch Umsetzung
a) einer Polyisocyanatkomponente mit
b) einer Salzgruppen-freien Polyolkomponente
   in Gegenwart von
c) mindestens einem Treibmittel,
d) mindestens einem Carbonsäure-Salz als Katalysator, sowie gegebenenfalls
e) weiteren Hilfs- und Zusatzmitteln der Polyurethanchemie,
dadurch gekennzeichnet, daß man als Komponente d) in einer Menge von 0,01 bis 100 Gew.-%, bezogen auf das Gewicht der Komponente b), in der Salz-Form vorliegende, Estergruppen-freie, Ethergruppen aufweisende Carbonsäuren verwendet, welche (im statistischen Mittel) pro Molekül weniger als 0,3 oder mehr als 1,3 Hydroxylgruppen aufweisen.

Gegenstand der Erfindung ist insbesondere auch die Herstellung von Verbundkörpern durch Hinterschäumen einer Kunststoffolie als Deckschicht mit einem zu einem Polyurethanschaumstoff ausreagierenden Reaktionsgemisch der vorstehend genannten Art.

Gegenstand der Erfindung sind schließlich auch die so erhaltenen Verbundkörper.

Bei der beim erfindungsgemäßen Verfahren einzusetzenden Polyisocyanatkomponente a) handelt es sich um beliebige Di- oder Polyisocyanate, insbesondere um solche mit aromatisch gebundenen Isocyanatgruppen. Vorzugsweise werden 2,4-Diisocyanatotoluol, dessen technische Gemische mit 2,6-Diisocyanatotoluol (TDI), sowie insbesondere bei Raumtemperatur flüssige Polyisocyanatgemische der Diphenylmethanreihe (MDI) eingesetzt. In diesem Zusammenhang insbesondere von Interesse sind Polyisocyanatgemische, wie sie durch Phosgenierung von Anilin-Formaldehyd-Kondensaten erhalten werden bzw. aus derartigen Phosgenierungsprodukten hergestellte Destillationsfraktionen bzw. Destillationsrückstände oder Urethan-, Carbodiimid-und/oder Uretdiongruppen aufweisende Modifizierungsprodukte derartiger Polyisocyanate oder Polyisocyanatgemische der Diphenylmethanreihe. Die bevorzugten, gegebenenfalls chemisch modifizierten Polyisocyanatgemische der Diphenylmethanreihe weisen im allgemeinen einen NCO-Gehalt von ca. 25 bis 33 Gew.-% auf.

Bei der Komponente b) handelt es sich insbesondere um Polyetherpolyole oder Gemische von Polyetherpolyolen mit einem (mittleren), aus Hydroxylgruppengehalt und Hydroxylfunktionalität errechenbaren Molekulargewicht von 400 bis 12 000, vorzugsweise 2 000 bis 6 000, und einer (mittleren) Hydroxylfunktionalität von 2 bis 8, vorzugsweise 2 bis 4, oder um Gemische aus derartigen Polyetherpolyolen mit mehrwertigen Alkoholen eines unter 400 liegenden Molekulargewichtes, die gegebenenfalls in einer Menge von bis zu 25 Gew.-%, bezogen auf das Gewicht der Polyetherpolyole mitverwendet werden können.

Die in Betracht kommenden Polyetherpolyole sind solche der an sich bekannten Art, wie sie durch Alkoxylierung geeigneter Startermoleküle, in an sich bekannter Weise zugänglich sind. Geeignete Startermoleküle sind beispielsweise Ethylenglykol, Propylenglykol, Trimethylolpropan, Glycerin, Sorbit, Pentaerythrit oder Saccharose bzw. beliebige Gemische derartiger mehrwertiger Alkohole. Ganz besonders bevorzugt werden Polyetherpolyole eingesetzt, die durch Alkoxylierung von trifunktionellen Startermolekülen, insbesondere von Trimethylolpropan und/oder Glycerin erhalten worden sind. Bei den Alkylenoxiden, die bei der Alkoxylierungsreaktion zum Einsatz gelangen, handelt es sich insbesondere um Propylenoxid oder Ethylenoxid bzw. um Gemische dieser beiden Alkylenoxide. Die genannten Alkylenoxide können bei der Alkoxylierungsreaktion auch nacheinander zum Einsatz gelangen. Weitere im Prinzip geeignete Polyole, die als Komponente b) zum Einsatz gelangen können, sind beispielsweise in der EP-A 0 380 993 beschrieben.

Die niedermolekularen mehrwertigen Alkohole eines unter 400 liegenden Molekulargewichts sind z.B. Ethylenglykol, Propylenglykol, Diethylenglykol, Dipropylenglykol, Glycerin, Trimethylolpropan oder deren Gemische.

Bei der Komponente c) handelt es sich vorzugsweise um Wasser. Neben Wasser können als Treibmittel auch beispielsweise halogenierte Kohlenwasserstoffe wie Trifluorchlormethan, fluorierte Kohlenwasserstoffe, leichtflüchtige organische Lösungsmittel wie z.B. Pentan, Aceton oder Diethylether eingesetzt werden. Die Mitverwendung solcher Treibmittel neben Wasser ist allerdings weniger bevorzugt.

Als erfindungswesentliche Katalysatoren d) kommen beliebige, Estergruppen-freie, Ethergruppen-aufweisende, zumindest teilweise in der Salzform, vorzugsweise Alkalisalz-Form vorliegende organische Carbonsäuren in Betracht, die pro Molekül (im statistischen Mittel) weniger als 0,3 oder mehr als 1,3 Hydroxylgruppen aufweisen. Zu den bevorzugten derartigen Salzen gehören zu 20 bis 100 % in der Alkalisalz-Form, vorzugsweise Natrium- oder Kaliumsalzform vorliegende, den genannten Bedingungen bezüglich des Hydroxylgruppengehalts entsprechende Ethercarbonsäuren mit einem Molekulargewicht von 250 bis 8.000, vorzugsweise 300 bis 1.000, die (im statistischen Mittel) pro Molekül mindestens 2 Etherbrücken, 0 bis 5, vorzugsweise 2 bis 3 Hydroxylgruppen und 1 bis 6, vorzugsweise 1 bis 3 zumindest teilweise in der Salzform vorliegende Carborylgruppen aufweisen. Die soeben gemachten Angaben bezüglich des Molekulargewichts beziehen sich auf die freie, unneutralisierte Säure. Unter den genannten Katalysatoren d) sind insbesondere solche bevorzugt, die entweder keine freien Hydroxylgruppen oder (im statistischen Mittel) mindestens 2 Hydroxylgruppen aufweisen, so daß sie bezüglich der Isocyanat-Additionsreaktion keinesfalls kettenabbrechend sondern allenfalls kettenverlängernd in Erscheinung treten.

Zu den besonders bevorzugten erfindungsgemäßen Katalysatoren d) gehören den gemachten Ausführungen entsprechend zumindest teilweise in der Alkalisalzform vorliegende Säuren der allgemeinen Formel 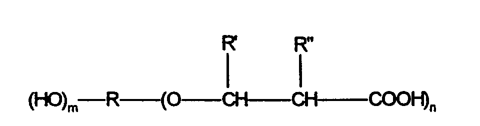
in welcher
- R: für einen Rest steht, wie er durch Entfernung der Hydroxylgruppen aus einem (m+n)-wertigen Estergruppen-freien Polyetheralkohol des Molekulargewichtsbereichs 300 bis 1.000 erhalten wird,
- R': für Wasserstoff oder eine Carboxylgruppe steht,
- R'': im Falle von R' = Wasserstoff für Wasserstoff oder eine Methylgruppe und im Falle von R' = -COOH für Wasserstoff steht,
- m: für eine ganze oder (im statistischen Mittel) gebrochene Zahl von 0 bis 5 steht, wobei der Bereich von 0,3 bis 1,3 ausgenommen ist, und
- n: für eine ganze oder (im statistischen Mittel) gebrochene Zahl von 1 bis 6 steht,
mit der Maßgabe, daß die Summe m+n einen Wert von 1 bis 6 ergibt.

Die Herstellung der erfindungswesentlichen Katalysatoren d) erfolgt beispielsweise durch Umsetzung von (i) Alkoholen der nachstehend näher genannten Art mit (ii) Derivaten von ungesättigten Carbonsäuren in Gegenwart von (iii) basischen Katalysatoren unter gleichzeitiger oder anschließender Überführung der aus (i) und (ii) gebildeten Umsetzungsprodukte in die erfindungswesentlichen Salze d).

Als Alkohole (i) kommen Polyetheralkohole des Molekulargewichtsbereichs 200 bis 4.000, vorzugsweise 300 bis 1.000 mit 1 bis 6, vorzugsweise 2 bis 3 Hydroxylgruppen pro Molekül oder beliebige Gemische derartiger Etheralkohole in Betracht. Alle in diesem Zuammenhang gemachten Angaben bezüglich des Molekulargewichts beziehen sich auf das (im Falle der Verwendung von Gemischen mittlere), aus OH-Gehalt und OH-Funktionalität errechenbare Molekulargewicht.

Bei den Polyetheralkoholen handelt es sich um Alkoxylierungsprodukte von Ethergruppen-freien Alkoholen wie beispielsweise Methanol, Ethanol, den isomeren Propanolen, Butanolen, Hexanolen oder Octanolen, Ethylenglykol, Propylenglykol, Glyzerin, Trimethylolpropan, Sorbit, Pentaerythrit oder Gemischen derartiger Startermoleküle, wobei zur Alkoxylierung insbesondere Ethylenoxid und/oder Propylenoxid, gegebenenfalls im Gemisch oder in beliebiger Reihenfolge zum Einsatz gelangen.

Bei den Carbonsäure-Derivaten (ii) handelt es sich um beliebige, auf einfache Weise in die entsprechende freie Säure überführbare Derivate von α,β-ungesättigten Carbonsäuren, insbesondere von Acrylsäure, Methacrylsäure, Maleinsäure oder Fumarsäure. Erfindungsgemäß geeignete Derivate dieser Säuren sind beispielsweise die Amide, Nitrile und insbesondere die C₁-C₆-Alkylester dieser Säuren. Bevorzugte Carbonsäure-Derivate (ii) sind C₁-C₆-Alkylester der Acrylsäure, insbesondere tert.-Butylacrylat..

Geeignete Katalysatoren (iii), die die Anlagerung von Hydroxylgruppen der Komponente (i) an die olefinische Doppelbindungen der Komponenten (ii) beschleunigen sind beispielsweise Alkalimetallorganyle wie Phenyllithium, Butyllithium, Grignardverbindungen wie Ethylmagnesiumbromid, Ammoniumhydroxid, Alkalihydroxide wie Natrium- oder Kaliumhydroxid, Alkali-Alkoholate und -Phenolate, Alkalihydride wie Natriumhydrid, Amine wie beispielsweise Guanidin, Phosphine wie beispielsweise Tributylphosphin, in der OH-Form vorliegende Ionenaustauscher, Nickel-acetylacetonat, Dialkylzinnoxide wie beispielsweise Diburyloxid. Besonders bevorzugt werden gepulvertes Kaliumhydroxid oder Kalium-tert.-butanolat als Katalysator (iii) eingesetzt.

Falls als Katalysator (iii) basische Alkali-Verbindungen der beispielhaft genannten Art eingesetzt werden, die nicht nur die Anlagerungsreaktion der Hydroxylgruppen an die olefinischen Doppelbindungen, sondern auch die Verseifungsreaktion unter Bildung der entsprechenden freien Carbonsäuren beschleunigen, ist es oftmals zweckmäßig, während der Additionsreaktion unter Bildung von Additionsverbindungen aus den Ausgangskomponenten (i) und (ii) der gleichzeitig in situ ablaufenden Verseifungsreaktion dadurch Rechnung zu tragen, daß die Menge des während der Verseifungsreaktion unter Salzbildung verbrauchte Katalysators entweder während der Reaktion durch weitere Katalysator-Zugabe ergänzt wird oder daß von Anfang an eine entsprechend höhere Menge des Katalysators verwendet wird. Dementsprechend kann bei der Umsetzung der Ausgangskomponenten (i) und (ii) die Menge des eingesetzten Katalysators (iii) in breiten Bereichen von 0,05 bis 10, vorzugsweise 0,5 bis 5 Mol.-%, bezogen auf die in der Ausgangskomponente (i) enthaltenen OH-Äquivalente schwanken.

Die Umsetzung der Ausgangsmaterialien (i) und (ii) in Gegenwart der Katalysatoren (iii) erfolgt in an sich bekannter Weise in einem Lösungsmittel oder bevorzugt in Substanz innerhalb des Temperaturbereiches 0 bis 100°C, bis die theoretisch zu erwartende Hydroxylzahl des Umsetzungsproduktes erreicht ist. Setzt man die α,β-ungesättigten Carbonsäure-Derivate (ii), bezogen auf die Menge der in der Alkoholkomponente (i) enthaltenen Hydroxylgruppen, im Unterschuß ein, werden Produkte erhalten, die noch freie Hydroxylgruppen aufweisen und daher bei der Durchführung des erfindungsgemäßen Verfahrens in die Verfahrensprodukte eingebaut werden. Falls zum vollständigen Umsatz der Hydroxylgruppen der Alkohole (i) ein Überschuß der Komponente (ii) eingesetzt wird, kann dieser nach erfolgter Umsetzung zum Beispiel durch Destillation aus dem Reaktionsgemisch entfernt und anschließend erneut eingesetzt werden.

Im allgemeinen werden die Mengenverhältnisse der Ausgangskomponenten (i) und (ii) so gewählt, daß in dem Reaktionsgemisch ein Molverhältnis von alkoholischen Hydroxylgruppen der Komponente (i) zu olefinischen Verbindungen der Komponente (ii) von 5 :1 bis 0,6 :1 liegt, wobei, entsprechend den bereits obengenannten Ausführungen, vorzugsweise darauf geachtet, daß die Hydroxylfunktionalität der Umsetzungsprodukte letztendlich unterhalb 0,3 bzw. oberhalb 1,3 liegt.

Geeignete Lösungsmittel für diese Umsetzung sind solche, die sich unter den Reaktionsbedingungen inert verhalten. In Frage kommen beispielsweise Diethylether, Ethylenglykoldimethylether, Tetrahydrofuran, Dioxan, tert.-Butanol, Benzol, Toluol, Chlorbenzol, Dimethylformamid, Dimethylsulfoxid, N-Methylpyrrolidon und Acetonitril. Bevorzugt ist die Umsetzung ohne Lösungsmittel.

Die Hydrolyse der als Zwischenstufe erhaltenen Ethercarbonsäurederivate erfolgt nach an sich bekannten Verfahren beispielsweise durch Umsetzung mit wäßrigen Säuren wie beispielsweise Halogenwasserstoffsäuren, Schwefelsäure, Phosphorsäure, Sulfonsäuren und Halogencarbonsäuren. Bevorzugt ist Salzsäure. In manchen Fällen ist es vorteilhaft, die Hydrolyse in Gegenwart eines Lösungsmittels durchzuführen, das nach beendeter Reak-tion wieder destillativ entfernt und erneut eingesetzt werden kann. In Frage kommen solche Lösungsmittel, die unter den Reaktionsbedingungen inert sind, also selbst nicht hydrolysiert oder protoniert werden. Genannt seien beispielsweise Diethylether, Ethylenglykoldimethylether, Tetrahydrofuran, Dioxan, tert.-Butanol, Benzol, Toluol, Chlorbenzol, Dimethylformamid, Dimethylsulfoxid, N-Methylpyrrolidon und Acetonitril. Die Hydrolyse der Ethercarbonsäurederivate erfolgt im allgemeinen innerhalb des Temperaturbereichs von 50 bis 110°C.

Zur Überführung der gebildeten Alkoxycarbonsäuren in die entsprechenden Salze werden vorzugsweise Hydroxide, Carbonate oder Bicarbonate von Natrium oder Kalium oder in der Polyurethanchemie übliche Amin-Katalysatoren der auch nachstehend beispielhaft genannten Art eingesetzt, wobei diese Basen vorzugsweise in Form von wäßrigen Lösungen zum Einsatz gelangen, so daß unmittelbar Gemische aus erfindungsgemäßem Katalysator d) und Treibmittel c) anfallen, die dann mit den übrigen Komponenten b) bis e) abgemischt werden. Die Herstellung der als Katalysatoren dienenden Salze durch Neutralisation der entsprechenden Ethercarbonsäuren kann auch in der Komponente b) oder in einem Teil der als Komponente b) zum Einsatz gelangenden Alkohole durchgeführt werden, so daß unmittelbar Lösungen der Katalysatoren b) in der Polyolkomponente B) bzw. einem Teil davon resultieren.

Falls zur Herstellung der Salze größere Wassermengen erforderlich sind als später als Treibmittel benötigt werden, kann der unerwünschte Überschuß selbstverständlich vor der Durchführung des erfindungsgemäßen Verfahrens destillativ entfernt werden.

Die Herstellung der erfindungswesentlichen Ethercarbonsäuresalze kann auch direkt aus den als Zwischenprodukt erhaltenen Umsetzungsprodukte aus den Ausgangskomponenten (i) und (ii) durch Verseifung mit wäßriger Alkalilauge erfolgen. Im Falle der Verwendung von Alkalihydroxiden als Katalysatoren für die Umsetzung der Ausgangskomponenten (i) und (ii) ist auch eine einstufige Herstellung der erfindungswesentlichen Katalysatoren d) denkbar.

Als weitere Herstellungsmöglichkeiten für die erfindungswesentlichen Katalysatoren d) seien beispielhaft genannt: Die Umsetzung von Etheralkoholen mit Chloressigsäurederivaten und anschließende Hydrolyse und Versalzung der erhaltenen Alkoxyessigsäurederivate, die Pfropfung von Etheralkoholen mit Acrylsäurederivaten und anschließende Hydrolyse und Versalzung der erhaltenen Ethercarbonsäurederivate sowie die partielle oder vollständige Oxidation von Etheralkoholen mit Oxidationsmitteln wie beispielsweise Chromaten, Permanganaten, Nitraten, Sauerstoff oder Peroxiden und anschließende Versalzung der erhaltenen Ethercarbonsäuren.

Die erfindungswesentlichen Katalysatoren d) werden bei der Durchführung des erfindungsgemäßen Verfahrens in einer Menge von 0,01 bis 100, vorzugsweise 0,1 bis 10 Gew.-%, bezogen auf das Gewicht der Komponente b) eingesetzt.

Neben den erfindungsgemäßen Katalysatoren kann das Reaktionsgemisch auch noch weitere, an sich bekannte Katalysatoren enthalten, obwohl dies weniger bevorzugt ist. Derartige Katalysatoren sind beispielsweise beliebige Alkalisalze von Carbonsäuren, die nicht der Definition der Komponente d) entsprechen, wie beispielsweise Kaliumacetat, Kaliumtartrat oder Kaliumsuccinat oder Klassische Katalysatoren wie Triethylendiamin, Bis-(2-dimethylaminoethyl)-ether, N,N-Dimethylethanolamin, N,N,N',N'',N''-Pentamethyldiethylentriamin, N-Methylmorpholin, Dimethylbenzylamin, tertiäre Alkylphosphine, Zinn(II)-octoat, Dibutylzinn-(IV)-dilaurat, sowie Chelate von Metallen, wie z.B. Chelate des Acetylacetonats von Magnesium, Zirkon oder Nickel. Diese gegebenenfalls mitverwendeten, der Gruppe e) der erfindungsgemäßen Ausgangsmaterialien zuzuordnenden Katalysatoren, werden, falls überhaupt, allenfalls in Mengen von max. 1,0 Gew.-%, bezogen auf das Gewicht der Komponente b) eingesetzt.

Weitere gegebenenfalls mitzuverwendende Hilfsmittel e) sind die üblichen Zusatzstoffe wie z.B. Flammschutzmittel, Füllstoffe, Pigmente, Weichmacher, Antistatika oder Zellregulierungsmittel.

Bei der Durchführung des erfindungsgemäßen Verfahrens werden die genannten Ausgangsmaterialien in solchen Mengenverhältnissen miteinander zur Reation gebracht, die einer NCO-Kennzahl (Anzahl der NCO-Gruppen dividiert durch die Anzahl der gegenüber NCO-Gruppen reaktionsfähigen Gruppen, multipliziert mit 100) von 60 bis 140 entspricht. Im allgemeinen werden die Komponenten b) bis e) zu einer "Polyolkomponente" vermischt, die dann nach den üblichen Methoden der Polyurethanschaumstoffherstellung mit der Polyisocyanatkomponente zur Reaktion gebracht wird.

Das erfindungsgemäße Verfahren eignet sich zur Herstellung von beliebigen Schaumstoffen. Vorzugsweise handelt es sich bei den erfindungsgemäßen Verfahrensprodukten jedoch um weiche oder halbharte Polyurethanschaumstoffe (Stauchhärte von 20 bis 400 KPa bei 40 % Verformung) einer Rohdichte von 30 bis 500, vorzugsweise 30 bis 200 kg/m , wie sie in an sich bekannter Weise zum Hinterschäumen von Kunststoffolien zwecks Herstellung von Folienverbundwerkstoffen für Polsterzwecke bzw. den Innenbereich von Kraftfahrzeugen, Flugzeugen oder Schiffen (Armaturenbretter, Türinnenverkleidungen, Armlehnen, Kopfstützen u.dgl.) zum Einsatz gelangen.

Für diesen speziellen Zweck geeignete Kunststoffolien sind alle beliebigen Deckschichten, die bisher bei der Herstellung von Folienverbundwerkstoffen durch Hinterschäumen von Kunststoffolien mit Polyurethanschaumstoffen hergestellt worden sind. Beispielhaft genannt seien Folien aus Polyvinylchlorid (PVC), Polyurethan, Polymerblends aus PVC und ABS oder thermoplastischen Polyolefinen.

Vorzugsweise erfolgt die Durchführung des erfindungsgemäßen Verfahrens dergestalt, daß man die Innenwände einer Form zumindest teilweise mit der zu hinterschäumenden Kunststoffolie auskleidet und dann das Formwerkzeug mit dem schäumfähigen Gemisch befüllt. Die für die Innenauskleidung der Formel verwendeten Folien können in an sich bekannter Weise vorgeformt werden, wobei man sich der bekannten Technik des Tiefziehens bzw. "Powder-Slush" bedient.

Die Menge des in die Form eingetragenen schäumfähigen Gemischs wird im allgemeinen so bemessen, daß Schaumstoffe des bereits obengenannten Rohdichtebereichs resultieren.

Die nachfolgenden Beispiele dienen der weiteren Erläuterung des erfindungsgemäßen Verfahrens. Alle Prozentangaben beziehen sich, soweit nichts anders lautendes angemerkt, auf das Gewicht.

### Beispiele

### Katalysator 1

### a) Acrylatadditon

In 1500 g (1,66 OH-Äquivalente) entwässertem Polyethermonool der OH-Zahl 62, hergestellt aus Butanol und EO, gelöst bzw. dispergiert man 1 g gepulvertes Kaliumhydroxid unter leichtem Erwärmen. Hierzu tropft man bei 35 bis 40°C 319 g (2,49 Mol) tert.-Butylacrylat über 2 Stunden zu und rührt noch weitere 5 Stunden bei 40°C. Nach dieser Zeit neutralisiert man den Katalysatoren mit 37 %iger Salzsäure und destilliert überschüssiges tert.-Butylacrylat im Wasserstrahlvakuum bis zu einer Sumpftemperatur von 80°C ab. Das resultierende Zwischenprodukt hat eine Hydroxylzahl von 6,8. Dies entspricht einem Umsatz von 90 % der anfangs vorhandenen Hydroxylgruppen. Daraus errechnet sich ein Ester-Äquivalentgewicht von 1134,4. Die Hydroxylfunktionalität des Umsetzungsprodukts liegt bei Null.

### b) Hydrolyse

1700 g Produkt (1,5 Ester-Äquivalente) gemäß 1a), 1700 ml Wasser und 29,6 ml (0,3 Mol) 37 %ige Salzsäure werden solange bei 95°C gerührt, bis die Destillation von tert.-Butanol beendet ist. Anschließend wird die verdünnte Salzsäure im Wasserstrahlvakuum bis zu einer maximalen Sumpftemperatur von 80°C abdestilliert. Die resultierende Ethersäure hat eine Säurezahl von 53,2. Dies entspricht einem Carboxyl-Äquivalentgewicht von 1054,5.

### c) Neutralisation

1400 g (1,33 Säure-Äquivalente) Zwischenprodukt gemäß 1b) werden durch tropfenweise Zugabe von 141,4 g (1,26 Mol) 50 %iger Kalilauge neutralisiert (Neutralisationsgrad 95 %, bezogen auf Säureäquivalente), wobei durch Kühlung die Innentemperatur zwischen 25-35°C gehalten wird. Anschließend wird durch Zugabe der berechneten Menge Wasser eine 80 %ige Lösung eingestellt. Das resultierende Produkt hat eine Viskosität von 130 mPa.s/25°C und eine Basenzahl von 42. Daraus ergibt sich ein Carboxylat-Äquivalentgewicht von 1335.

### Katalysator 2

### a) Acrylataddition

Analog Beispiel 1a) werden 1500 g (7,14 OH-Äquivalente) Polyetherdiol der OH-Zahl 265, hergestellt aus Propylenglykol und PO und 1371 g (10,71 Mol) tert.-Butylacrylat in Gegenwart von 4 g gepulvertem Kaliumhydroxid umgesetzt. Das resultierende Zwischenprodukt hat eine Hydroxylzahl von 23,4. Dies entspricht einem Umsatz von 87 % der anfangs vorhandenen Hydroxylgruppen. Daraus errechnet sich ein Ester-Äquivalentgewicht von 370,4. Die Hydroxylfunktionalität des Umsetzungsprodukts liegt bei 0,26.

### b) Hydrolyse

Analog Beispiel 1b) werden 2340 g (6,32 Ester-Äquivalente) Zwischenprodukt gemäß 2a), 2340 g Wasser und 124,6 g (1,26 Mol) 37 %ige Salzsäure unter Zusatz von 500 ml Dioxan umgesetzt. Die resultierende Ethersäure hat eine Säurezahl von 187,4. Dies entspricht einem Carboxyl-Äquivalentgewicht von 299,4.

### c) Neutralisation

1712 g (5,72 Säure-Äquivalente) Zwischenprodukt gemäß 2b) werden mit 449 g (4,01 Mol) 50 %iger Kalilauge neutralisiert (Neutralisationsgrad 70 %, bezogen auf Säure-Äquivalente) und durch Zugabe von Wasser auf einen Feststoffgehalt von 80 % eingestellt. Das resultierende Produkt hat eine Viskosität von 360 mPa.s/25°C und eine Basenzahl von 102,5. Daraus ergibt sich ein Carboxylat-Äquivalentgewicht von 547,3.

### Katalysator 3

### a) Acrylataddition

Analog Beispiel 1a) werden 1500 g (14,71 OH-Äquivalente) Polyethertriol der OH-Zahl 550, hergestellt aus Trimethylolpropan und PO und 659 g (5,15 Mol) tert.-Butylacrylat in Gegenwart von 8,2 g gepulvertem Kaliumhydroxid umgesetzt. Das resultierende Zwischenprodukt hat eine Hydroxylzahl von 272,1. Dies entspricht einem Umsatz von 31 % der anfangs vorhandenen Hydroxylgruppen. Daraus errechnet sich eine Ester-Äquivalentgewicht von 455,2. Die Hydroxylfunktionalität des Umsetzungsprodukts liegt bei 2,07.

### b) Hydrolyse

Analog Beispiel 1b) werden 2040 g (4,48 Ester-Äquivalente) Zwischenprodukt gemäß 3a), 2040 g Wasser und 88 g (0,9 Mol) 37 %ige Salzsäure umgesetzt. Die resultierende Ethersäure hat eine Säurezshl von 104. Dies entspricht einem Carboxyl-Äquivalentgewicht von 539,4.

### c) Neutralisation

1474 g (2,73 Säure-Äquivalente) Zwischenprodukt gemäß 3b) werden mit 307 g (2,73 Mol) 50 %iger Kalilauge neutralisiert (Neutralisationsgrad 100 %, bezogen auf Säure-Äquivalente) und durch Zugabe von Wasser auf einen Feststoffgehalt von 80 % eingestellt. Das resultierende Produkt hat eine Viskosität von 500 mPa.s/25°C und eine Basenzahl von 75,6. Daraus ergibt sich ein Carboxylat-Äquivalentgewicht von 742,1.

### Katalysator 4

### a) Acrylataddition

Analog Beispiel 1a) werden 1500 g (12 OH-Äquivalente) Polyetherhexaol der OH-Zahl 450, hergestellt aus Sorbit und PO und 829 g (6,48 Mol) tert.-Butylacrylat in Gegenwart von 6,7 g gepulvertem Kaliumhydroxid umgesetzt. Das resultierende Zwischenprodukt hat eine Hydroxylzahl von 157. Dies entspricht einem Umsatz von 48 % der anfangs vorhandenen Hydroxylgruppen. Daraus errechnet sich ein Ester-Äquivalentgewicht von 389.1. Die Hydroxylfunktionalität des Umsetzungsprodukts liegt bei 3,12.

### b) Hydrolyse

Analog Beispiel 1b) werden 2030 g (5,22 Ester-Äquivalente) Zwischenprodukt gemäß 4a), 2030 g Wasser und 103 g (1,04 Mol) 37 %ige Salzsäure umgesetzt. Die resultierende Ethersäure hat eine Säurezahl von 145,3. Dies entspricht einem Carboxyl-Äquivalentgewicht von 386,1.

### c) Neutralisation

1569 g (4,06 Säure-Äquivalente) Zwischenprodukt gemäß 4b) werden mit 387,4 g (3,45 Mol) 50 %iger Kalilauge neutralisiert (Neutralisationsgrad 85 %, bezogen auf Säure-Äquivalente) und durch Zugabe von Wasser auf einen Feststoffgehalt von 80% eingestellt. Das resultierende Produkt hat eine Viskosität von 540 mPa.s/25°C und eine Basenzahl von 97,7. Daraus ergibt sich ein Carboxylat-Äquivalentgewicht von 574,2.

### Katalysator 5

### a) Acrylataddition

Analog Beispiel 1a) werden 224 g (1 OH-Äquivalent) Polyethertriol der OH-Zahl 250, hergestellt aus Trimethylolpropan, 1,1 % PO und 98,9 % EO und 192 g (1,5 Mol) tert.-Butylacrylat in Gegenwart von 1,2 g gepulvertem Kaliumhydroxid umgesetzt. Das resultierende Zwischenprodukt hat eine Hydroxylzahl von 33,2. Dies entspricht einem Umsatz von 81 % der anfangs vorhandenen Hydroxylgruppen. Daraus errechnet sich ein Ester-Äquivalentgewicht von 405,8. Die Hydroxylfunktionalität des Umsetzungsprodukts liegt bei 2,0.

### b) Hydrolyse

Analog Beispiel 1b) werden 250 g (0,62 Ester-Äquivalente) Zwischenprodukt gemäß 5a), und 113 g (0,31 Mol) 10 %ige Salzsäure umgesetzt. Die resultierende Ethersäure hat eine Säurezahl von 144. Dies entspricht einem Carboxyl-Äquivalentgewicht von 389,6.

### c) Neutralisation

190 g (0,49 Säure-Äquivalente) Zwischenprodukt gemäß 5b) werden mit 38,1 g (0,34 Mol) 50 %iger Kalilauge neutralisiert (Neutralisationsgrad 69 %), bezogen auf Säure-Äquivalente) und durch Zugabe von Wasser auf einen Feststoffgehalt von 80 % eingestellt. Das resultierende Produkt hat eine Viskosität von 390 mPa.s/25°C und eine Basenzahl von 75,4. Daraus ergibt sich ein Carboxylat-Äquivalentgewicht von 744.

### Herstellung von erfindungsgemäßen Polyformulierungen

100 Gew.-Teile eines Polyetherpolyols OH-Zahl 28, hergestellt durch Propoxylierung von Trimethylolpropan und anschließende Ethoxylierung des Propoxylierungsprodukts (PO:EO-Gewichtsverhältnis = 85:15), werden in zwei Parallelversuchen mit Katalysator vermischt. Anschließend werden diese Mischungen jeweils mit Wasser vermischt, so daß die Mischung 3,2 Gew.-Teile Wasser enthält.

Die Katalysator-Konzentrationen wurden in allen Beispielen so gewählt, daß annähernd gleiche Steigzeiten resultieren (150 ± 10 sek.).

### Polyisocyanatkomponente

In den nachfolgenden Beispielen wurde ein Polyisocyanatgemischt der Diphenylmethanreihe mit einer Viskosität (23°C) von 200 mPas.s und einem NCO-Gehalt von 32 Gew.-% verwendet.

### Erfindungsgemäße Beispiele und Vergleichsbeispiele

Die Herstellung der Schaumstoffe erfolgt nach der Methode der Handverschäumung. Dabei werden alle Komponenten mit Ausnahme der Polyisocyanatkomponente während 30 sec vorgerührt (Rührgeschwindigkeit: 1.000 U/min). Anschließend wird die Polyisocyanatkomponente zugesetzt und während weiterer 10 sec bei 25°C weiter gerührt. Die NCO-Kennzahl beträgt in allen Beispielen 100.

Die Start-, Steig- und Abbindezeiten wurden bestimmt, wobei die Polyolformulierung wie beschrieben mit der Polyisocyauatkomponente in einem 660 ml Pappbecher unter Rühren bei 25°C vereinigt wird. Die Startzeit ist dann die Zeit, die vom Zeitpunkt der Polyisocyanatzugabe bis Beginn des Schäumvorgangs verstreicht; die Steigzeit ist die Zeit, die vom Zeitpunkt der Polyisocyanatzugabe bis zur Beendigung des Schäumvorgangs verstreicht; die Abbindezeit ist die Zeit, die vom Zeitpunkt der Polyisocyanatzugabe bis zur Klebfeiheit des Schaumstoffs verstreicht.

Beispiel A ist erfindungsgemäß unter Verwendung von 8,0 Gew.-Teilen Katalysator 1.

Beispiel B ist erfindungsgemäß unter Verwendung von 4,0 Gew.-Teilen Katalysator 2.

Beispiel C ist erfindungsgemäß unter Verwendung von 4,0 Gew.-Teilen Katalysator 3.

Beispiel D ist erfindungsgemäß unter Verwendung von 4,0 Gew.-Teilen Katalysatoren 4.

Beispiel 3 ist erfindungsgemäß unter Verwendung von 3,75 Gew.-Teilen Katalysator 5.

Beispiel F ist ein Vergleichsbeispiel, welches dem erfindungsgemäßen Beispiel A entspricht, wobei lediglich der erfindungsgemäße Katalysator durch 0,3 Gew.-Teile Kaliumacetat ersetzt worden ist.

Beispiel G ist ein Vergleichsbeispiel, welches dem erfindungsgemäßen Beispiel A entspricht, wobei lediglich der erfindungsgemäße Katalysator durch 0,3 Gew.-Teile N,N,N',N'-Tetramethylhexamethylendiamin ersetzt worden ist.

| Beispiel | A | B | C | D | E | F | G |
|---|---|---|---|---|---|---|---|
| Startzeit (s) | 15 | 17 | 18 | 34 | 24 | 18 | 15 |
| Steigzeit (s) | 142 | 140 | 155 | 157 | 135 | 161 | 141 |

## Patentansprüche

1. Verfahren zur Herstellung von Polyurethanschaumstoffen durch Umsetzung
a) einer Polyisocyanatkomponente mit
b) einer Salzgruppen-freien Polyolkomponente
in Gegenwart von
c) mindestens einem Treibmittel,
d) mindestens einem Carbonsäure-Salz als Katalysator, sowie gegebenenfalls
e) weiteren Hilfs- und Zusatzmitteln der Polyurethanchemie,
dadurch gekennzeichnet, daß man als Komponente d) in einer Menge von 0,01 bis 100 Gew.-%, bezogen auf das Gewicht der Komponente b), in der Salz-Form vorliegende, Estergruppen-freie, Ethergruppen aufweisende Carbonsäuren verwendet, welche (im statistischen Mittel) pro Molekül weniger als 0,3 oder mehr als 1,3 Hydroxylgruppen aufweisen.

2. Verfahren gemäß Anspruch 1 zur Herstellung von Verbundkörpern durch Hinterschäumen einer Kunststoffolie als Deckschicht mit einem zu einem Polyurethanschaumstoff ausreagierenden Reaktionsgemisch, bestehend im wesentlichen aus den im Anspruch 1 genannten Komponenten a) bis d) und gegebenenfalls e), dadurch gekennzeichnet, daß man als Komponente d) in einer Menge von 0,01 bis 100 Gew.-%, bezogen auf das Gewicht der Komponente b), ganz oder teilweise in der Salzform vorliegende, Estergruppen-freie, Ethergruppen aufweisende Carbonsäure verwendet, welche (im statistischen Mittel) pro Molekül weniger als 0,3 oder mehr als 1,3 Hydroxylgruppen aufweisen.

3. Verfahren nach Anspruch 1 und 2, dadurch gekennzeichnet, daß man als Komponente d) zumindest teilweise in der Alkalisalz-Form vorliegende Salze von Ethergruppen aufweisenden Carbonsäuren der allgemeinen Formel 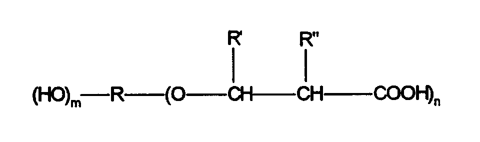 verwendet, wobei
R für einen Rest steht, wie er durch Entfernung der Hydroxylgruppen aus einem (m+n)-wertigen Estergruppen-freien Polyetheralkohol des Molekulargewichtsbereichs 300 bis 1.000 erhalten wird,
R' für Wasserstoff oder eine Carboxylgruppe steht,
R'' im Falle von R' = Wasserstoff für Wasserstoff oder eine Methylgruppe und im Falle von R' = -COOH für Wasserstoff steht,
m für eine ganze oder (im statistischen Mittel) gebrochene Zahl von 0 bis 5 steht, wobei der Bereich von 0,3 bis 1,3 ausgenommen ist, und
n für eine ganze oder (im statistischen Mittel) gebrochene Zahl von 1 bis 6 steht,
mit der Maßgabe, daß die Summe m+n einen Wert von 1 bis 6 ergibt.

4. Verfahren gemäß Ansprüchen 1 bis 3, dadurch gekennzeichnet, daß man als Komponente a) bei Raumtemperatur flüssige, gegebenenfalls Urethan-, Carbodiimid- und/oder Uretdiongruppen aufweisende Polyisocyanatgemische der Diphenylmethanreihe verwendet.

5. Verfahren gemäß Anspruch 1 bis 4, dadurch gekennzeichnet, daß man als Komponente b) Polyetherpolyole oder Gemische von Polyetherpolyolen einer (mittleren) Hydroxylfunktionalität von 2 bis 4 bei einem Molekulargewicht von 400 bis 12 000, oder Gemische derartiger Polyetherpolyole mit bis zu 25 Gew.-%, bezogen auf das Gewicht der Komponente b) an 2- und/oder 3-wertigen Alkoholen eines unter 400 liegenden Molekulargewichtes verwendet.

6. Verfahren nach Anspruch 1 bis 5, dadurch gekennzeichnet, daß man als Komponente c) Wasser verwendet.

7. Gemäß Anspruch 2 hergestellte Verbundkörper.
